# EUROPEAN PATENT APPLICATION

(11) **EP 1 186 977 A2**
(43) Date of publication of application: **13.03.2002**
(21) Application number: 01121199.2
(22) Date of filing: 04.09.2001
(51) Int. Cl.: G05B 19/409

(54) **Machine information displaying system of textile machine**

(30) Priority: 12.09.2000 JP 2000275833
(71) Applicant: Murata Kikai Kabushiki Kaisha, Minami-ku, Kyoto-shi, Kyoto 601 (JP)
(72) Inventor: Nakano, Taiji, Shiga-gun, Shiga (JP)
(74) Representative: Liedl, Christine, Dipl.-Chem.

(57) **Abstract**

The object of the present invention is to provide a system capable of grasping visually and easily the information of the current status, the operational setting, and the production, out of the machine information of the textile machinery. The displaying system includes a computer machine for gathering and processing the operational data of each machine, a memory for storing and accumulating the data, and a screen for displaying the processed result of the data, as the main composition. By clicking the "operation" icon of the main menu page, the current status page is displayed. The current status page displays in numbers the actual efficiency (AEF %), the mechanical efficiency (SEF %), the number of doffing (NDOF) inside each cell corresponding to each machine comprised of winding unit, and according to the differences in the current status of the machine, the corresponding cell is displayed in different colors. Thus, the current status of the entire machine can be grasped at a glance. In the current status page, a jump button to jump to the operational setting page for displaying the present operational setting of each machine, is employed (Fig. 2).

## Description

### Field of the Invention

The present invention relates to a machine information displaying system capable of displaying in graphics by using the screen, various machine information of the textile machinery comprised of a plurality of machines.

### Backgroud of the Invention

In the Unexamined Japanese Patent Application Publication (Tokkai-Hei) No. 1999-107075, the applicant has proposed a system capable of carrying out the maintenance and repairing easily and accurately by gathering machine information relating to the impediment in the textile machinery comprised of a plurality of machines such as an automatic winder or a ring spinning frame, and . displaying the impediment information on the screen, so that the information is easily grasped.

The machine information relating to the textile machinery, especially the information relating to impediments is useful information for a person in charge of the maintenance. However, the supervisors and the workers are required to know the information such as the current status of the machine or the production, not only the impediment information.

The object of the present invention is to provide a system which enables the grasping of the information of the current status, the operational setting, the production, which are useful for such supervisors and workers, visually and easily.

### Summary of the Invention

The present invention provides a system capable of displaying in graphics the current status, the operational setting or the production, of every machine composing the textile machinery, in an easily understandable form. The present invention is characterized in that the machine information displaying system is adopted for the displaying of the current status of the machine. It is a system comprising a means for accumulating the data, a means for processing the accumulated data, and a screen for displaying the processed result of the data, and is set to accumulate the operating data of the textile machinery comprised of a plurality of machines, and displays in graphics on the screen the required machine information in reference to the accumulated data. The present invention is characterized in that it is made capable of displaying the current status page which is set to project on the screen the cells corresponding to each machine, displaying in numbers inside the corresponding cell, the machine information of designated items of each machine, and displaying the whole or a part of the corresponding cell in different colors according to the differences in the current status.

The machine information displaying system according to the present invention constructed likewise, displays in numbers, the machine information of the designated items such as the actual efficiency, the mechanical efficiency, the number of doffing, inside the cells corresponding to each machine, and is set to use different colors for each corresponding cells according to the distinction of the operating status of the machine, such as halt, standby, running. Therefore, it is possible to look at the screen with a glance to know instantly which machine is under which current status.

On the other hand, the present invention is characterized in that the machine information displaying system is adopted for displaying the operational setting of each machine. It is a system comprising a means for accumulating the data, a means for processing the accumulated data, and a screen for displaying the processed result of the data; and is set to accumulate the operating data of the textile machinery comprised of a plurality of machines and to display in graphics on the screen the required machine information according to the accumulated data. The present invention is characterized in that it is made capable of displaying the operational setting page which is set to display in a chart on the screen the setting items and the set value which are set per each machine.

The machine information displaying system according to the present invention displays in a chart the operational setting of each machine according to aforementioned construction, thus the abnormality or inaccuracy in the set value can easily be searched and recognized.

It is preferable to employ a switch button to jump to the next operational setting page, in the previous current status page. Furthermore, the present invention is most suitable for the case in which the textile machinery is an automatic winder.

The present invention is characterized in that the machine information displaying system is adopted for displaying the production of each machine separately, and comprises a means for accumulating the data, a means for processing the accumulated data, and a screen for displaying the processed result of the data. It is a system set to accumulate the operating data of the textile machinery comprised of a plurality of machines, and displays in graphics on the screen the required machine information according to the accumulated data, wherein the textile machinery is an automatic winder comprises the doffing apparatus.

The present invention is capable of displaying the detailed production page set to display in a chart on the screen the number of doffing and the production of each machines separately over the fixed period of time.

As constructed likewise, the machine information displaying system of the present invention displays in a chart, the number of doffing or the production per each machine over the designated fixed period of time. Thus, the grasping of the change in the operational condition of each machine is simplified.

In the detailed production page, by setting the change in the number of doffing of the designated machine and the manufactured weight of the designated machine over a fixed period of time in the past to be displayed in a graph, the change in the manufacturing condition of the machine can be grasped more easily.

Furthermore, in the machine information displaying system, it is preferable to have the operating control page which displays the number of doffing and/or the production of the entire machine, and to employ a switch button in the operating control page, to jump to the individual production display.

### Brief Description of the Drawings

Figure 1 shows the main menu page relating to one embodiment of the machine information displaying system according to the present invention.
Figure 2 shows the current status page relating to one embodiment of the machine information displaying system according to the present invention.
Figure 3 shows the operational setting page relating to one embodiment of the machine information displaying system according to the present invention.
Figure 4 shows the operating control page relating to one embodiment of the machine information displaying system according to the present invention.
Figure 5 shows the detailed production page relating to one embodiment of the machine information displaying system according to the present invention.
Figure 6 shows the monthly production page relating to one embodiment of the machine information displaying system according to the present invention.
Figure 7 shows the manufacturing efficiency page relating to one embodiment of the machine information displaying system according to the present invention.
Figure 8 shows the shift data page relating to one embodiment of the machine information displaying system according to the present invention.
Figure 9 shows the maintenance page relating to one embodiment of the machine information displaying system according to the present invention.
Figure 10 is a schematic block diagram showing the embodiment wherein the present invention is applied to the automatic winder.
Figure 11 is a schematic block diagram wherein the automatic winder applying the present invention is connected to the spinning frame and the yarn end finder is attached.

### Detailed Description of the Preferred Embodiments

The embodiment wherein the present invention is applied to the machine information displaying system of the automatic winder employing a doffing apparatus will now be described. The present invention may be applied to various textile machineries, such as a roving frame, a spinning frame, a weaving machine, a knitting machine, a take-up winder (high speed filament winder), a draw texturing machine, an air-typed spinning machine, not to be limited to an automatic winder.

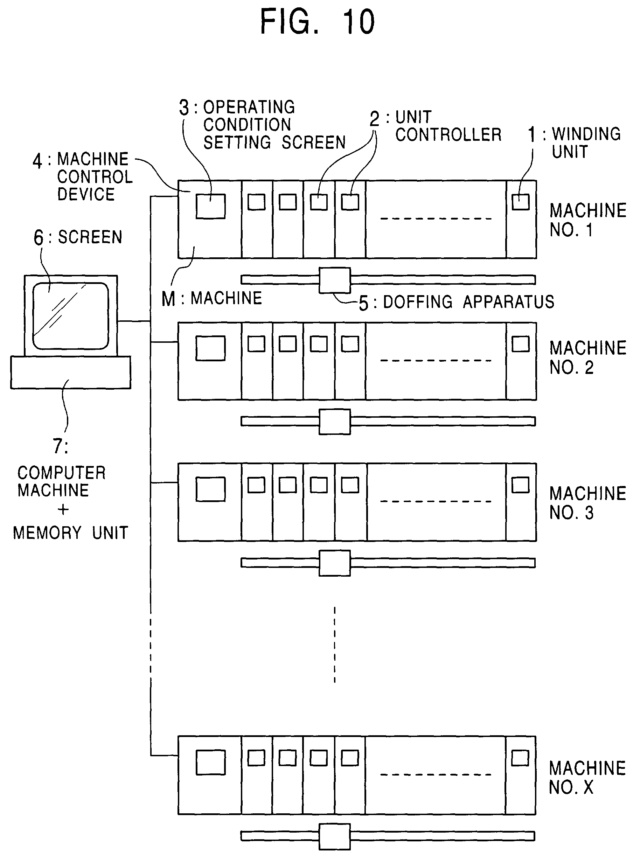

Figure 10 shows one example of the automatic winder wherein the present invention is to be applied. The automatic winder shown in the drawing is constituted by providing a plurality of machine M comprised of a plurality of winding units 1 in proximity in a row arrangement. The winding unit 1 unwinds the yarn from the delivered supply bobbin, winds to the bobbin while traversing by the revolving driving force of the friction drum, and forms a designated yarn package. In the midst of the yarn path leading to the yarn package from the supply bobbin of each winding unit 1, normally, for example, a balloon breaker, a yarn sensor for detecting the presence or the absence of the yarn, a tensor for applying designated tension to the yarn, a waxing device for applying wax to the yarn, a slub catcher (a yarn clearer) for detecting the defect in the yarn and for cutting the yarn by a cutter when there is a defect in the yarn, a splicer for joining the upper yarn (the yarn end at the package side) and the lower yarn (the yarn end at the supply bobbin side) in the case of yarn breakage, a suction mouth for capturing the upper yarn and guiding to the splicer, a retie pipe for capturing the lower yarn and guiding to the splicer, are employed.

The operation of each winding unit 1 is controlled by a unit controller 2 employed respectively, and the operating condition of each unit controller 2 can be set by a machine control device 4 employed to each machine M. The display or the like for displaying an operating condition setting screen 3 is attached to the machine control device 4. The setting of the operating condition of each unit controller 2 can be made to be carried out on the operating condition setting screen 3.

In the embodiment of the present invention, a doffing apparatus 5 which runs in the longitudinal direction and doffs automatically the yarn package from the winding unit 1 of which the winding has completed, is employed to each machine M.

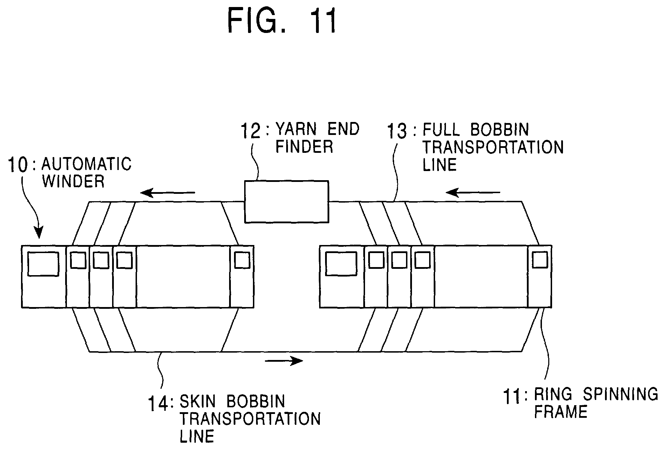

Moreover, as requested, the yarn end finder for carrying out the preparation process beforehand to the supply bobbin which is to be transported to the automatic winder, can be connected to the machine M. In this case, as illustrated in Figure 11, it can be supposed that an automatic winder 10 and a ring spinning frame 11 are connected by a full bobbin transportation line 13 and an empty bobbin transportation line 14 to form a transportation line in a closed loop, and a yarn end finder 12 for carrying out the preparation process (the yarn end finding process) to the supply bobbin (the spinning bobbin) manufactured in the ring spinning frame 11, is employed in the midst of the full bobbin transportation line 13.

Meanwhile, in the embodiment described above, each machine M is comprised of a plurality of winding unit 1, but it is not to exclude a case in which one machine M is comprised of only one unit.

The machine information displaying system of the example (hereafter referred to as the displaying system) gathers and accumulates the operating data of each machine of the automatic winder constructed likewise, and displays in graphics on the screen the necessary machine information according to the accumulated data. Moreover, when the doffing apparatus, the yarn end finder and/or the spinning machine or the like are provided, the displaying system gathers and accumulates the operating data of these doffing apparatus, yarn end finder and/or spinning machine or the like, and displays in graphics on the screen the necessary machine information according to the accumulated data.

More specifically, as shown in Figure 10, a computer machine 7, such as a personal computer or a work station, having a screen 6 of the display or the like, is connected to a machine control device 4 of each machine M, the computer machine 7 processes various kinds of data gathered from the machine control device 4, and the processed result of the data is displayed on the screen 6. In this case, it is preferred to make all the machine information to be managed by one computer machine 7.

The computer machine 7 includes a memory unit such as a hard disk for storing and accumulating the gathered data and the processed data, in many cases. However, the memory unit can be attached to the outside. Furthermore, if necessary, the printer for the print out and the modem, a TA (Terminal Adapter) or the like for communication are to be connected. The computer machine 7 is appropriate for the processing means, and the memory unit is for the means for accumulating the data.

In this embodiment, various operating data of the machine M was made to be output to the computer machine 7 via the machine control device 4 from the unit controller 2 for controlling the operation of the winding unit 1. However, it can be constructed so that the data is to be output to the computer machine 7 directly from the unit controller 2.

Various kinds of information can be earned from the textile machinery of the automatic winder or the like, while operating. The displaying system is characterized in that it gathers and accumulates this data, and at the same time, classifies the machine information which is earned by processing such data appropriately, and displays in graphics on the screen such as a display, in an accessible form. This will be described in reference to the drawings.

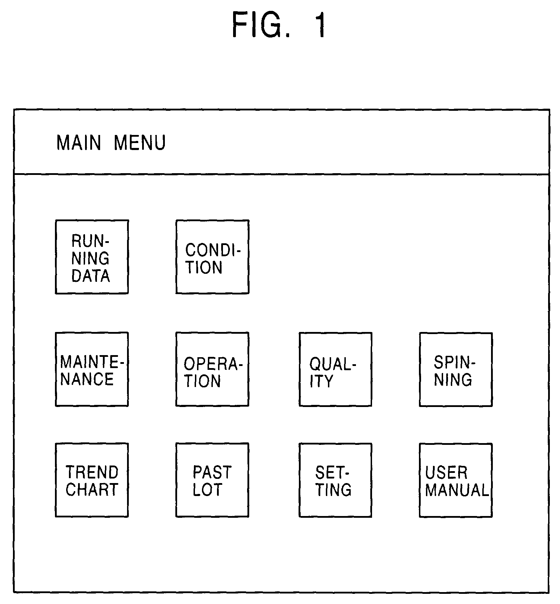

Figure 1 is the main menu page showing the types of the machine information capable of being displayed according to the displaying system. The icon for calling out the data corresponding to the types of the machine information is displayed. Then, by clicking the requested icon on the screen, it is set to display the necessary machine information on the screen.

The types of machine information provided by the displaying system are the running data relating to the running efficiency or the abnormality occurrence rate of the machine, the current status data relating to the current condition or the operational setting of the machine, the maintenance data relating to the areas needing maintenance, the operating control data relating to such as the transition in the production, the yarn quality data relating to the yarn defects such as the yarn breakage, the past running data relating to the change in the running condition over a fixed period of time in the past, the past lot data relating to the change in the yarn quality according to each lot unit over a fixed period of time in the past, the spinning frame data relating to the running condition of the spinning frame in the case the spinning frame is connected to the automatic winder. To correspond to aforementioned each data, "running data", "current", "maintenance", "operation", "quality", "trend chart", "past lot", "spinning" are labeled on each icon of the main menu page. Furthermore, in this embodiment, the icon for the setting of the displaying system (displayed as "setting"), and the icon for the reference of the user manual of the displaying system (displayed as "user manual") are placed in the main menu page.

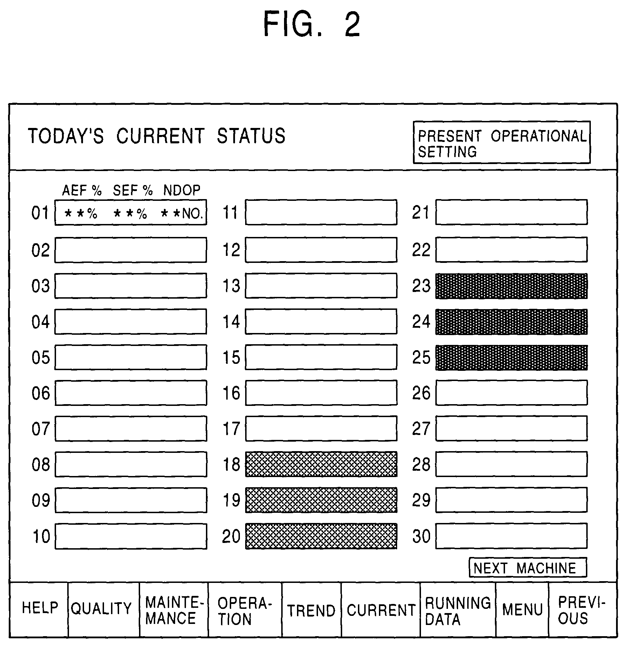

The present invention is characterized in the displaying form of the current status data, and the displaying form of the operating control data relating to the production or the like, out of the machine information. When clicking the "current" icon of the main menu page, the today's current status page, as shown in Figure 2, is displayed. In this current status page, the cells corresponding to each machine of the automatic winder accordingly are projected, and the actual efficiency (AEF %), the mechanical efficiency (SEF %) , the number of doffing (NDOF) of the machines are set to be displayed in numbers in the corresponding cells. The kinds of the items to be displayed in the cells are capable of being changed accordingly.

Furthermore, in the embodiment, it was set to display corresponding cells in different colors according to the differences in the machine current status of the automatic winder. For example, the running condition of the machine is separated into three kinds, during operation, during standby (waiting for the arrival of the supply bobbin), during halt (for maintenance or the occurrence of trouble), and the cell is made green during operation, white for during halt, and yellow during standby. Such coloring display enables to grasp at a glance which machine is under which condition. In the example shown in the drawing, out of the machines from No.1 through No. 30, three machines of No. 18 through No. 20 are on standby, and three machines of No. 23 through No. 25 are under operation.

In the bottom of the current status page, for example, a jump button to jump to the main menu page or the other machine information displaying page, a help button, a button to return to the previous displayed page, are placed. Moreover, in the case the number of machines is large, and the cells corresponding to all machines cannot be displayed once in one page, a page switch button (displayed as "next machine") can be placed in the right place. Furthermore in the example, a jump button to jump to the operational setting page which displays in a chart the present operational setting of each machine, can be placed within the current status page.

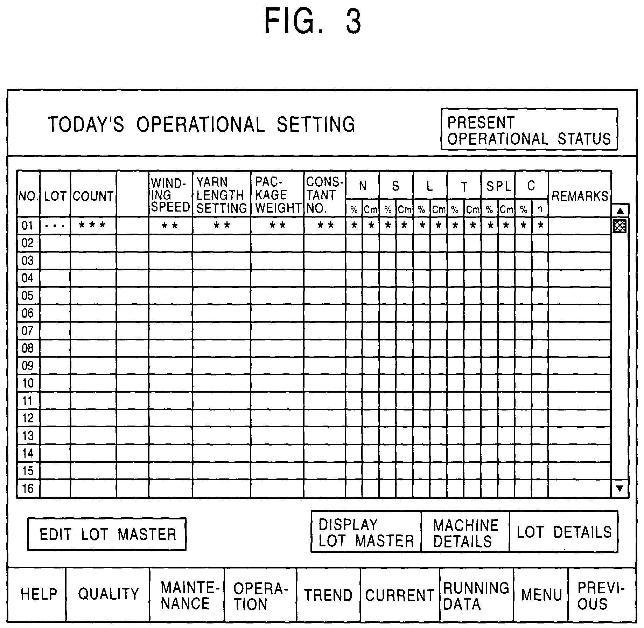

The operational setting page displays in a chart the setting value of various items, such as the lot number, the count, the winding speed, the yarn length setting, the package weight, the yarn defect, of each machine, as shown in Figure 3 for example. In the bottom of this operational setting page, the buttons, such as the jump button to jump to the main menu page or the other machine information displaying page, the help button, the button to return to the previous displayed page, are employed in one set, and in the head of this page, a jump button to jump to the current status page is employed. Furthermore, as requested, a "machine details" button for displaying the operational setting of machines in more detail, or a "lot details" button for displaying the setting content per each lot in more detail, can also be employed in this page.

Likewise, the discovering of the setting mistake is made easier and the occurrence of the defective packages can be prevented more easily as a result of displaying the operational setting content of each machine in a chart. Further, the operational setting page is set to be directly opened from the current status page. Thus, the relationship between the running condition and the operational setting of the machines can easily be grasped, and it is useful for predicting or specifying the cause in the case an error occurs.

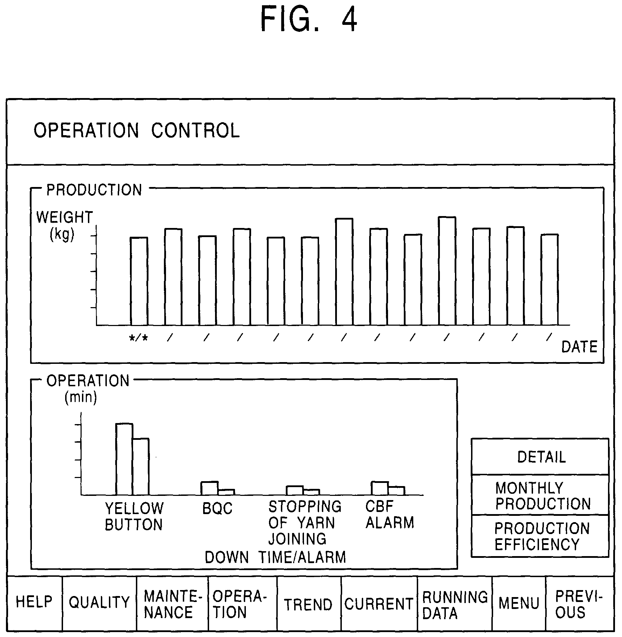

When clicking the "operation" icon of the main menu page, the operating control page, as shown in Figure 4, is displayed. The graph in the head section of this operating control page, is a bar graph showing the change in the production of the entire automatic winders during a fixed period of time (for example, two weeks). The graph in the bottom section is a graph showing the average value of aforementioned period of time (on the right side) and today's value (on the left side) of the down time of the alarm processing resulting from the troubles in machines or the defect in the quality of the supply bobbin. The "down time of the alarm processing" is the time starting from alarm stopping of the machine until the resuming of the operation after the repairing work is completed by human hands. In the graph at the head section of the page, the production of the yarn is displayed by being converting into weight (kg). On the other hand, the graph in the bottom section of the page showing the down time of the alarm processing is set to display the down time according to each abnormality cause. The down time concerning the yellow button, the bobbin quality (BQC: the stopping of the alarm due to the detecting number of the defect in yarn in the winding process reaching the prescribed value), the stop of yarn joining, the trouble in the yarn end finder (CBF alarm), are adopted for the display items.

Inside the operating control page, the jump buttons to jump to the other information displaying pages are placed all together in the bottom of the page, and the "detail" button to display the detailed data of the production, the " monthly production" button to display the manufacturing condition of a designated month, and in the case the spinning frame is connected to the automatic winder, the "manufacturing efficiency" button to display the comparison between the actual production and the spinning frame theoretical production, are also employed.

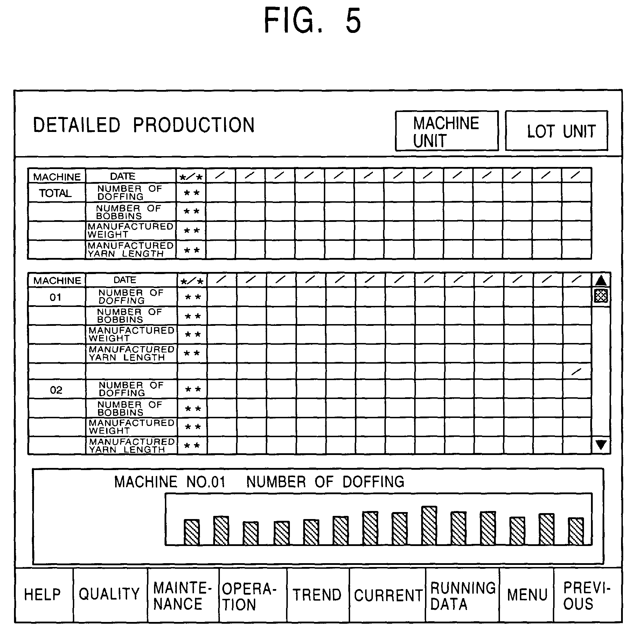

When clicking the "detail" button, the detailed production page, as illustrated in Figure 5, is displayed. This page displays in a chart the change in the manufacturing condition over the fixed period of time in the past (for example, two weeks) per each item. A reference chart of the change in the production of the entire automatic winders is displayed in the head section of the page. A reference chart of the production per each machine is displayed in the middle section of the page. A graph showing the change in the items selected randomly from the other two reference charts is displayed in the bottom section of the page. In the embodiment, the number of doffing, the number of bobbins consumed, the manufactured weight, the manufactured yarn length, are chosen for the display items in each reference chart. By clicking and selecting the display item randomly from the items displayed in the head or the middle section of the page, the change in the selected item is displayed in the graph in the bottom section of the page. Thus, for example, when selecting the number of doffing in the reference chart in the head section of the page, the change in the total number of doffing of each day over the past two weeks is displayed in the graph in the bottom section of the page. When selecting the number of doffing of the machine No. 1 in the reference chart in the middle . section of the page, the change in the number of doffing of each day over the past two weeks of the machine No.1 is displayed in the graph in the bottom section of the page. Furthermore, the "machine unit" button and the "lot unit" button are employed in the detailed production page, and when clicking the "lot unit" button, the calculating unit of the production is switched per each lot and the reference chart or the graph is made to be displayed.

Likewise, the employment of the page capable of displaying the change in the production in detail per each machine or per each lot enables the grasp of the manufacturing condition to be easier.

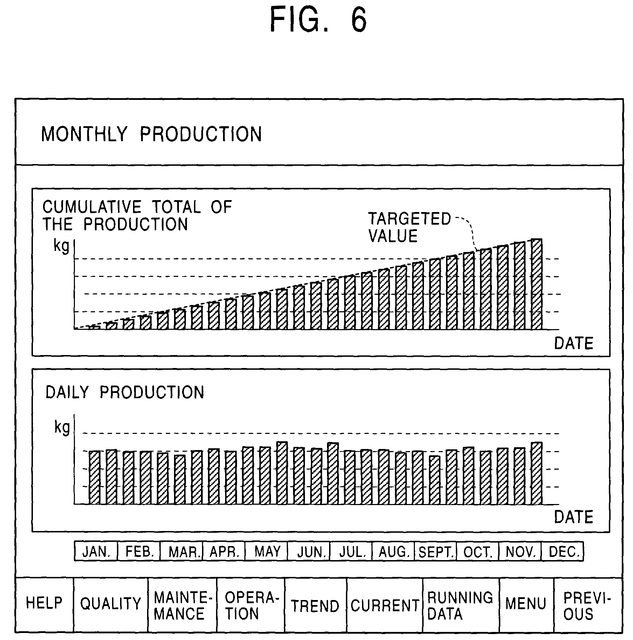

Next, when clicking the "monthly production" button of the operating control page, the monthly production page as shown in Figure 6 is displayed. In this page, the graph showing the cumulative total of the production (weight) of each day of the present month or the selected past month and the targeted value are displayed in the head section of the page, and the graph showing the change in the entire production (weight) of each day over the whole month of the selected month, is displayed in the bottom section of the page. In the downside of the lower graph, the buttons for selecting the month of which is to be displayed, are placed, and in this example, the change in the cumulative total of the production and the whole production of a random month of the past one year can be displayed in a graph.

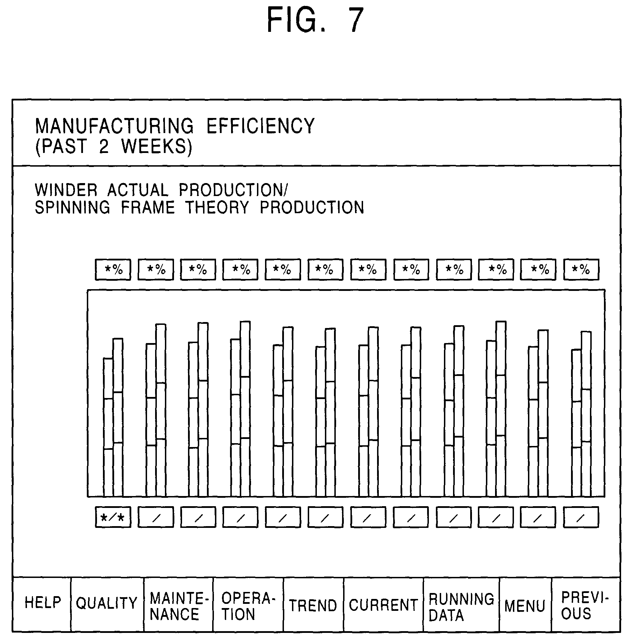

Furthermore, in the case the automatic winder and the spinning frame are connected, when clicking the "manufacturing efficiency" button of the operating control page, the manufacturing efficiency page as shown in Figure 7 is displayed. This page displays the manufacturing efficiency graph wherein the actual production of each day over a fixed period of time in the past (for example, two weeks), and the spinning frame theoretical production when the rate of the spinning frame is assumed to be 100%, can be compared by a set of bar graphs adjacent to one another. In this graph, in each set of bar graphs, the left side indicates the actual production and the right side indicates the theoretical production. Moreover, in the case the production process of one day is composed of several work shifts, each bar graph can be displayed in different colors to indicate the production in each work shift. Each production is indicated in a value converted into weight. In the upper part of each set of bar graphs, the rate of the actual production to the spinning frame theoretical production is displayed in percentage. Furthermore, when clicking the manufacturing date button displayed in the lower part of each set of bar graphs, the manufacturing efficiency graph by each winding unit of the selected date can be made to be displayed. As a result, the winding unit of which the manufacturing efficiency is low can easily be discovered.

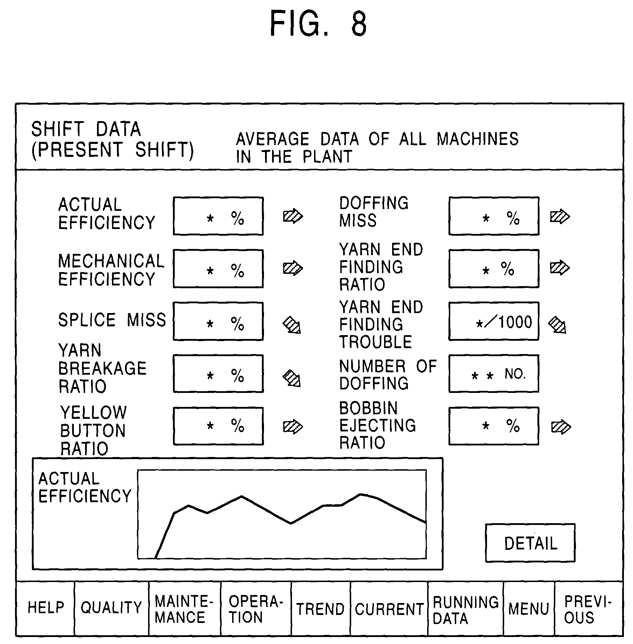

The displaying form of the other machine information according to the displaying system will now be described briefly. When clicking the "running" icon in the main menu page, the shift data page as shown in Figure 8 is displayed. This page is for displaying the present running condition of the entire automatic winder, per each item. The actual efficiency, the machinery efficiency, the yarn joining miss ratio, the yarn breakage ratio, the yellow button ratio, the doffing miss ratio, the yarn end finding ratio, the yarn end finding trouble occurrence frequency, the number of doffing, the bobbin discharging rate are selected for the display items. The average value of the entire machines of such items are displayed in numbers inside the cell, and it is set to indicate the tendency in the change by an arrow next to each cell. In other words, the present value, and the average value over a fixed period of time in the past or the value in the previous work shift are compared and in the case it is prone to be deteriorating, a red arrow is displayed and in the case it is prone to be not changing or improving, a blue arrow is displayed. Moreover, in this page, a graph indicating the change over the fixed period of time in the past of the selected items chosen from aforementioned display items, can be displayed.

Furthermore, the diagrams will be abbreviated, however, by clicking the " detail" button, it can be switched to a page for displaying a reference chart of the value of each items at the present moment per each machine.

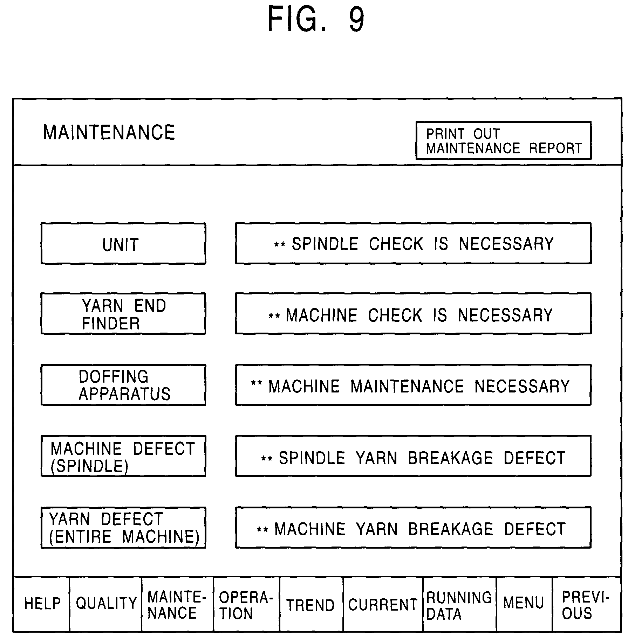

When clicking the "maintenance" icon in the main menu page, the maintenance page as shown in Figure 9 is displayed, and for example, the number of units of machine (unit), yarn end finder, doffing apparatus, of which inspection or maintenance is necessary, the number of yarn packages which have problems in the yarn quality, the number of machines including the abnormality cause, are made to be informed in a message.

When clicking the "unit" button inside this maintenance page, the winding units needing maintenance are listed up, and the content of such maintenance cause, the detailed maintenance information such as the recurrence condition, the abnormality occurrence frequency, the record of the abnormality occurrence, over a fixed period of time in the past are set to be indicated.

Furthermore, when clicking the "yarn end finder" button of the maintenance page, the detailed maintenance information of the yarn end finder, when clicking the "doffing apparatus" button, the detailed maintenance information of the doffing apparatus, are set to be displayed in the same manner as the winding unit.

When clicking the "quality" icon of the main menu page, the presence or the absence of the yarn package including abnormalities such as a yarn breakage, or the machine which tends to generate errors, are displayed, and the change in the abnormality occurrence rate over the fixed period of time in the past is made to be displayed according to each causes. As a result, the time when the abnormality generated and its contents can be specified, and the accuracy of the quality control can be improved.

When clicking the "spinning" icon, the running condition of the spinning frame connected to the automatic winder is displayed all together or per each machine.

Furthermore, when clicking the "trend" button, the change over the fixed period of time in the past (for example from two weeks to two years) of the randomly chosen items selected from the display items (for example, the production, the manufacturing efficiency, the abnormality occurrence rate) set beforehand, can be displayed in graph in machine units or the average of the entire machines.

By clicking the "past lot" button, the change in the production, the abnormality occurrence rate, the abnormality occurrence causes of the rather long period of time in the past, and so forth can be made to be displayed in a reference chart in a lot unit. Likewise, in the case the cause of the abnormalities is the material quality or the change in climate, this can be easily found and high standard quality control can be carried out by the function for displaying in graph the past data accumulated over a long period of time.

The displaying system is not to be limited to the embodiment described above. Especially, the layout or the display items of each page to be displayed on the screen can be changed accordingly.

Moreover, it is preferable for the machine information displayed on the screen to be capable of being printed out accordingly.

Furthermore, the machine information gathered and accumulated in the displaying system is not to be used only in the factory where the textile machineries are placed, but can also be constructed to transmit to the supervisor in a remote place via the communication line such as LAN or the Internet.

The present invention classifies appropriately and displays in graphics in a very easily understandable form, the machine information of the textile machinery. Therefore, the factory manager, the workers, the maintenance representative, can reliably obtain without confusion, the. information needed by each user having different roles. Especially in the present invention, the machine information of the designated items is set to be displayed in the today's current status page. In addition, the current status of each machine is also set to be displayed in different colors in the same page. Thus, the current status and the efficiency of the entire machine can be grasped instantly. Moreover, since the function for displaying a chart of the operational setting of each machine in one page is employed, the abnormalities or mistakes in the operational setting can easily be found, thus leading to the improvement in the accuracy of the quality control.

Furthermore, since the number of doffing and the production of each machine over a fixed period of time are made to be displayed, the change in the manufacturing condition of each machine can easily be grasped in a detail, thus the current status of the machine can easily be monitored.

## Claims

1. A machine information displaying system of the textile machinery comprising:
a means for accumulating the data;
a means for processing the accumulated data; and
a screen for displaying the processed result of the data;
wherein it is a system set to accumulate the operating data of the textile machinery comprised of a plurality of machines, and to display in graphics the required machine information on the screen in reference to the accumulated data; and
wherein the current status page is set to project the cells corresponding to each machine on the screen and display in numbers the machine information of the designated item per each machine in said corresponding cell, and display in different colors the whole or a part of said corresponding cells according to the differences in the current status of each machine.

2. A machine information displaying system of the textile machinery comprising:
a means for accumulating the data;
a means for processing the accumulated data; and
a screen for displaying the processed result of the data;
wherein it is a system set to accumulate the operating data of the textile machinery comprised of a plurality of machines, and to display in graphics the required machine information on the screen in reference to the accumulated data; and
wherein the operational setting page is set to display the setting items and the setting value set per each machine in a chart on the screen.

3. A machine information displaying system of the textile machinery wherein a switch button to jump to the operational setting page according to claim 2 is employed inside the current status page according to claim 1.

4. A machine information displaying system of the textile machinery according to claim 1 or claim 2 wherein said textile machinery is an automatic winder.

5. A machine information displaying system of the textile machinery comprising:
a means for accumulating the data;
a means for processing the accumulated data; and
a screen for displaying the processed result of the data;
wherein it is a system set to accumulate the operating data of the textile machinery comprised of a plurality of machines, and to display in graphics the required machine information on the screen in reference to the accumulated data;
wherein said textile machinery is an automatic winder comprising the doffing apparatus; and
wherein the detailed production page is set to display the number of doffing and the production of each single machine over a fixed period of time, in a chart on the screen.

6. A machine information displaying system of the textile machinery according to claim 5 wherein said detailed production page is set to display in a graph, the change in the number of doffing of the designated machine or the manufactured weight of the designated machine over a fixed period of time.

7. A machine information displaying system of the textile machinery comprising:
a means for accumulating the data;
a means for processing the accumulated data; and
a screen for displaying the processed result of the data;
wherein it is a system set to accumulate the operating data of the textile machinery comprised of a plurality of machines, and to display in graphics the required machine information on the screen in reference to the accumulated data;
wherein said textile machine is an automatic winder comprising a doffing apparatus;
wherein the operating control page which displays the number of doffing and/ or the production of the entire machine can be made to be displayed; and
a switch button to jump to said detailed production page according to claim 5 or claim 6, is employed in the operating control page.
